# EUROPEAN PATENT APPLICATION

(11) **EP 1 742 438 A1**
(43) Date of publication of application: **10.01.2007**
(21) Application number: 06010082.3
(22) Date of filing: 16.05.2006
(51) Int. Cl.: H04L 29/06

(54) **Network device for secure packet dispatching via port isolation**

(30) Priority: 05.07.2005 US 174998
(71) Applicant: Zyxel Communications Corporation, Hsin-Chu, Taiwan (TW)
(72) Inventor: Peng, Yang-Hung, c/o zyxel Comm. Corp., Hsin-Chu (TW); Chung, Hsien Kang, c/o Zyxel Comm. Corp., Hsin-Chu (TW)
(74) Representative: Görz, Ingo

(57) **Abstract**

The invention relates to a network device for dispatching data packets from a transmitter on a data transmission network. The data transmission network also includes an abnormality detection module for detecting abnormality relative to the transmitter. The network device receives the data packets through an input port and transmits the data packets out through a plurality of output ports. The network device includes a port-isolating module which blocks the transmission of the data packets between the input port and some of the plurality of output ports in response to the abnormality detected by the abnormality detection module in accordance with a predetermined policy.

## Description

### BACKGROUND OF THE INVENTION

### 1. Field of the invention

The present invention relates generally to network security and, more particularly, to a network device for secure packet dispatching via port-isolation.

### 2. Description of the prior art

The first computers were largely stand-alone units with no direct connection to other computers or computer networks. Data exchanges between computers were mainly accomplished by exchanging magnetic or optical media such as floppy disks. Over time, more and more computers were connected to each other using Local Area Networks or "LANs". In both cases, maintaining security and controlling what information a computer user could access was relatively simple because the overall computing environment was limited and clearly defmed.

In traditional computing networks, a desktop computer largely remained in a fixed location and was physically connected to a single local network via Ethernet. More recently, however, an increasingly large number of business and individual users are using portable computing devices, such as laptop computers, that are moved frequently and that connect into more than one network. For example, many users now have laptop computers that are plugged into a corporate network during the day and are plugged into a home network during the evening. Computers can be connected to networks at home, at work, and in numerous other locations. Many users also have home computers that are remotely connected to various organizations from time to time through wide area networks (WANs), including the Internet. The number of computing devices, and the number of networks that these devices connect to, has increased dramatically in recent years.

In addition, various types of connections may be utilized to connect to these different networks. A dial-up modem may be used for remote access to an office network. Various types of wireless connectivity, including IEEE (Institute of Electrical and Electronics Engineers) 802.11 and Bluetooth, are also increasingly popular. Wireless networks often have a large number of users that are occasionally connected from time to time. Moreover, connection to these networks is often very easy, as connection does not require a physical link. Wireless and other types of networks are frequently provided in cafes, airports, convention centers, and other public locations to enable mobile computer users to connect to the Internet. Increasingly, users are also using the Internet to remotely connect to a number of different systems and networks. For example, a user may connect his or her home computer to a corporate network through a virtual private network (VPN) which creates a secure session between the home computer and the corporation's network.

As more and more computers are connecting to a number of different networks (including the Internet), a whole new set of challenges face network administrators and individual users alike: previously closed computing environments are now open to a worldwide network of computer systems. Specific challenges, for example, include the following: (1) attacks by perpetrators (hackers) capable of damaging the local computer systems, misusing those systems, or stealing proprietary data and programs; (2) unauthorized access to external data (e.g., pornographic or other inappropriate Web sites); (3) infiltration by viruses and "Trojan horse" programs; and (4) employee abuse of business computer resources for unauthorized personal activities (e.g., accessing on-line games or streaming audio/video programs).

One mechanism traditionally used to address several of the above challenges is a firewall product. Traditional firewall products guard a boundary (or gateway) between a local network, such as a corporate network, and a larger network, such as the Internet. These products primarily regulate traffic between physical networks by establishing and enforcing rules that regulate access based upon the type of access request, the source requesting access, the connection port to be accessed, and other factors. For example, a firewall may permit access from a specific IP address or range (or zone) of IP addresses, but deny access from other addresses. However, one of the implications of the increasing number of devices occasionally connected to different networks is that traditional corporate firewall technologies are no longer effective. Traditional firewall technology guarding a network boundary does not protect against traffic that does not traverse that boundary. It does not regulate traffic between two devices within the network or two devices outside the network. A corporate firewall provides some degree of protection when a device is connected to that particular corporate network, but it provides no protection when the device is connected to other networks. In addition, a traditional firewall may not protect against intrusions originating from a remote device which is connected to a corporate (or similar) network.

More recently, a security measure that has been utilized by many users is to install a personal firewall (or end point security) product on a computer system to control traffic into and out of the system. An end point security product can regulate all traffic into and out of a particular computer. For example, an end point security product may expressly seek authorization from a user or administrator (or from a policy established by a user or administrator) for each network connection to or from a computing device, including connections initiated from the device and those initiated from external sources. This enables a user or administrator to monitor what applications on a device are accessing the Internet. It also enforces security by obtaining authorization for each Internet or network connection to (or from) the device.

Another protective measure implemented by many users and administrators is to install an anti-virus application on their machines to provide protection against infiltration by viruses and "Trojan horse" programs. An anti-virus application typically includes an engine which has a database or repository of virus information (typically referred to as "virus signatures") that enables identification of viruses and other malicious code. At specified intervals the anti-virus engine will scan the computer system to detect any files that match known virus signatures. The anti-virus engine may also analyze new files received, opened, or saved on the computer system in order to bar infiltration by viruses. For example, the anti-virus engine may check e-mail attachments received by the local system. Typically, the anti-virus engine analyzes all files that are to be stored locally before such files are saved to disk in an effort to avoid installation of files containing viruses. Anti-virus programs are currently available from a number of vendors, including Norton (Symantec), McAfee, and Trend Micro. Typically, these vendors of anti-virus programs also provide frequent virus signature updates (usually through provision of a virus-data defmition or "DAT" file) as new viruses are discovered. The updated virus information in the DAT file received by a user is added to the local database or repository, enabling identification and avoidance of new viruses.

Although end point security and anti-virus products, when properly used, provide considerable protection to users and administrators of computer systems and networks, several problems remain. One problem is that if a machine connected to a corporate network (e.g. a remote client machine connected through a VPN gateway) is infected with a virus, it may infect other machines on the same network. An infected computer that is connected to a particular network (e.g. a corporate LAN) may put the entire network at risk. For instance, the computer may be infected with a virus that intentionally tries to spread itself to other machines in the network. One machine that is not running the up-to-date anti-virus engine or is not equipped with current virus signature definitions may be easily infected through the network. Still another problem is that there might be security holes in the computer system, which cause it to be vulnerable to threat from hackers or newly released viruses. Ensuring that all machines on a network are sufficiently protected against security problems is extremely difficult. For example, a Trojan horse routine on a client computer may intentionally deactivate the anti-virus engine on that machine. In another case, a user may also intentionally or unintentionally disable virus checking on the machine. Another user may not understand the importance to patch the computer system, or he may not be authorized to do that on a particular machine. These limitations make providing a secure networking environment an even more difficult task because the virus-infected or vulnerable machines might jeopardize the security of the entire network.

There is, therefore, a need for a solution that ensures secure data transmission among all machines connected to a network. Particularly, the solution should provide a mechanism for locating those virus-infected and vulnerable machines on the network and for limiting their access to the network to provide appropriate protection to all users.

### SUMMARY OF THE INVENTION

The present invention pertains to a network device, such as a router or a switch, for secure packet dispatching on a data transmission network via port-isolation. The data transmission network includes a transmitter coupled to at least one recipient by the network device. The data transmission network also includes an abnormality detection module which is capable of detecting abnormality relative to the transmitter. The network device receives data packets sent by the transmitter through an input port, and it transmits them out of the network device through a plurality of output ports in accordance with their destinations. The network device further includes a port-isolating module which cooperates with the abnormality detection module. According to a predetermined policy, the port-isolating module blocks transmission of the data packets between the input port and some of the plurality of output ports in response to the abnormality detected by the abnormality detection module.

The advantage and spirit of the invention may be understood by the following recitations together with the appended drawings.

### BRIEF DESCRIPTION OF THE APPENDED DRAWINGS

FIG. 1 illustrates an exemplary configuration of the data transmission network 1 according to an embodiment of the invention.
FIG. 2 illustrates an alternate configuration of the data transmission network 1 shown in FIG. 1.

### DETAILED DESCRIPTION OF THE INVENTION

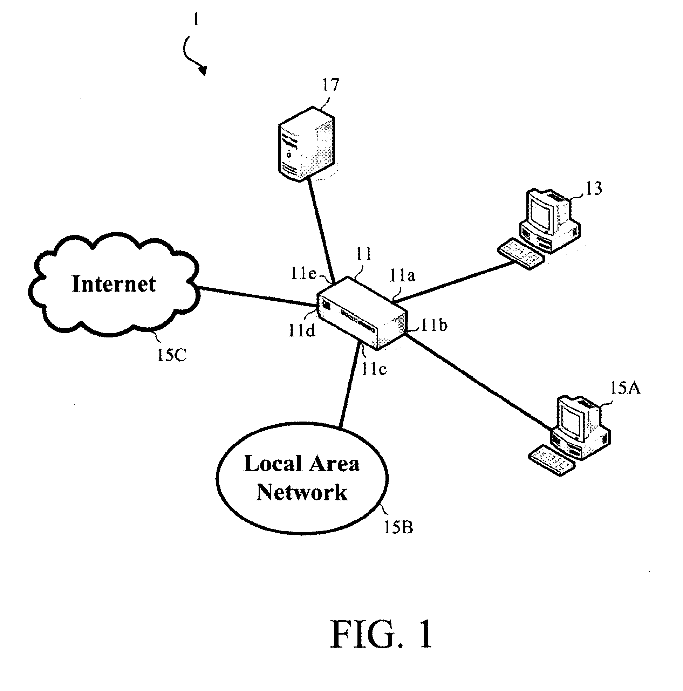

The network device according to the invention is used for secure packet dispatching over a data transmission network to prevent from the transfer of viruses or other unwanted data. In one embodiment, the network device is a router or switch which is capable of connecting several network segments that have multiple hosts, such as a local area network, wireless network, and the Internet. FIG. 1 illustrates an exemplary configuration of the data transmission network 1 according to an embodiment of the invention. As shown in FIG. 1, the data transmission network 1 includes a transmitter 13 coupled to at least one recipient by the network device 11. The recipients may include a host 15A, a LAN 15B, and the Internet 15C. The transmitter 13 is a host or terminal connected to the data transmission network 1, and it sends data packets that have various destination addresses on the network. The network device 11 then receives the data packets through an input port 11a connected to the transmitter 13 and forwards them in accordance with their destination addresses through a plurality of output ports 11b/11c/11d.

The data transmission network 1 also includes an abnormality detection module 17 capable of remotely performing an examining process on a host through the data transmission network 1. The examining process includes verifying if the host is infected by a virus or if it is suffering from vulnerability, such as expired virus definition signature and security holes. The abnormality detection module 17 notifies the network device 11 of the virus-infected and vulnerable hosts, and the network device 11 may deny the transmission of packets from the abnormal hosts, or allow the transmission. In an embodiment, the abnormality detection module 17 may be installed in a stand-alone server connected to the network 1. The abnormality detection module 17 may also be integrated into the network device 11. In practical applications, the abnormality detection module 17 is an anti-virus engine, such as TMSS (Trend Micro Home Network Security Service) or similar products of other vendors.

The network device 11, according to the invention, regulates the traffic between a transmitter 13 and other devices on the data transmission network 1 by a port-isolating module (not shown in FIG. 1) in accordance with a predetermined policy, once the abnormality detection module 17 discovers that the transmitter 13 is infected by a virus or is being vulnerable. In an embodiment, the abnormality detection module 17 monitors the abnormal networking status, and it is capable of locating those virus-infected or vulnerable hosts on the data transmission network 1. The abnormality detection module 17 communicates with the port-isolating module of the network device 11 and enables it to be aware of the data packets from an abnormal host. When the network device 11 receives a packet from a transmitter 13 connected to port 11a, the port-isolating module verifies whether it comes from an abnormal host by looking up the blacklist periodically advertised by the abnormality detection module 17 or by consulting the abnormality detection module 17 directly. If the verification result shows that the source of the packet can be trusted, the network device 11 forwards the packet through the ports 11b/11c/11d in accordance with its destination address. In the event that the packet is sent by a virus-infected or vulnerable host, forwarding the packet might cause security problem of the entire network. In an embodiment, the port-isolating module may deny the transmission of packets from abnormal hosts that have been reported by the abnormality detection module 17, or it may allow the transmission in accordance with a predetermined policy.

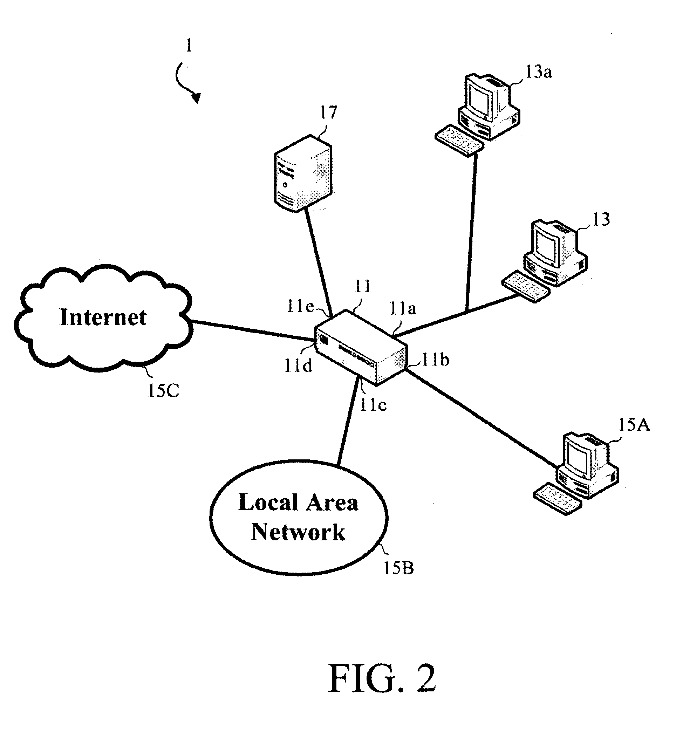

The policy enforced by the network device 11 may also be changed from time to time by a user or administrator (e.g. in response to certain events, such as a threat from a serious virus that has been released). For example, the network device 11 may discard the packets from a virus-infected transmitter 13 connected to the port 11a and may decide not to forward them through the ports 11b/11c/11d, so as to prevent the virus from spreading over the network 1. On the other hand, the network device 11 may block the communication between the port 11a and the ports 11b/11c, so as to isolate a vulnerable host 13 from being affected by potential security problems on the network. Meanwhile, the network device 11 may permit the vulnerable host 13 to access the Internet 15C through port 11d, such that a user can fetch the necessary patch from the Internet 15C to fix the vulnerability of the host 13. It should be noted that the port-isolation is performed on individual hosts connected to the same port of the network device 11. Referring to FIG. 2, a host 13a which passes the verification of the abnormality module 17 can access the network normally through the port 11 a, despite the fact that an abnormal host 13 is also connected to the port 11 a.

In an embodiment, the network device 11 provides a web-based interface for configuring the predetermined policy. A user or administrator may access the network device 11 by using a web browser to load a management webpage, which enables the modification of settings or parameters affecting the security policies.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A network device for dispatching data packets from a transmitter on a data transmission network, an abnormality detection module being used for detecting abnormality relative to the transmitter, said network device comprising:
an input port for receiving the data packets;
a plurality of output ports assigned for transmitting the data packets out of the network device; and
a port-isolating module, cooperating with the abnormality detection module, for blocking, according to a predetermined policy, transmission of the data packets between the input port and some of the plurality of output ports in response to the abnormality detected by the abnormality detection module.

2. The network device of claim 1, wherein the network device is a switch.

3. The network device of claim 1, wherein the network device is a router.

4. The network device of claim 1, wherein the abnormality detection module is built in the network device.

5. The network device of claim 1, wherein the abnormality detection module is installed in a stand-alone server connected to the data transmission network.

6. The network device of claim 5, wherein the abnormality detection module is an anti-virus application.

7. The network device of claim 1 further comprising an interface for configuring the predetermined policy.
